Europäisches Patentamt

European Patent Office

Office européen des brevets

(11) Publication number: **0 217 761**
**A2**

(12) **EUROPEAN PATENT APPLICATION**

(21) Application number: **86830267.0**

(22) Date of filing: **01.10.86**

(51) Int. Cl.⁴: **F 16 G 15/00**

(30) Priority: **01.10.85 IT 1180985 U**

(43) Date of publication of application:
**08.04.87 Bulletin 87/15**

(84) Designated Contracting States:
**AT BE CH DE FR GB LI LU NL SE**

(71) Applicant: **Lunardini, Narciso**
**Via Comparini 29**
**I-55049 Viareggio Lucca(IT)**

(71) Applicant: **Giannoni, Andrea**
**Via Matteotti 24**
**I-55049 Viareggio Lucca(IT)**

(72) Inventor: **Lunardini, Narciso**
**Via Comparini 29**
**I-55049 Viareggio Lucca(IT)**

(72) Inventor: **Stagi, Vincenzo**
**Via Corte Pagnini 27**
**I-55048 Torre Del Lago Lucca(IT)**

(74) Representative: **Mannucci, Gianfranco, Dott.-Ing.**
**Ufficio Tecnico Ing. A. Mannucci Via della Scala 4**
**I-50123 Firenze(IT)**

(54) **Clamp for metal chains, mostly gauged chains, for several uses.**

(57) The clamp is intended for engaging metal chains for several uses and comprises, within a block (1), a shaped passage (3) to guide the sliding of the oriented chain (5), and a pair of levers (13) symmetrically movable relative to said passage (3), manoeuvrable from the outside, and elastically urged one towards the other into a position in which they give rise to a contrast shoulder for the chain links (6) that find themselves in an alternate orientation in respect to the ones which are in the orthogonal orientation.

Fig. 4

## DESCRIPTION

0217761

The invention refers to a clamp for chains having oval links engaged to each other, mostly for gauged, high resistance chains, which has the purpose of defining the length of a predetermined chain stretch to be subjected to a draught action without the need of cutting the chain.

According to the invention, a clamp for engaging metal chains, suitable for several uses as in mechanics (car-body building) ship-building and other, comprises in a block a shaped passage for guiding the slide movement of the oriented chain, and a pair of levers symmetrically movable relative to said passage, manoeuvrable from the outside, and elastically urged one towards the other into a position in which they give rise to a contrast shoulder for the chain links that find themselves in alternate orientation in respect to the ones which are in the orthogonal orientation.

Advantageously, the two levers have concave ends to fit the profile of the links which they must cooperate with.

In relation to the high forces which stress the chain, the invention provides that the levers move close to one another so as to avoid a shearing stress of the link with which they co-act.

According to a practical embodiment, each of the two levers is carried by a shaft being supported on opposite sides on the block. In addition, the levers can be operated through respective finger (or equivalent) levers, each one being solid with said shaft and outwardly disposed in respect to a face of said block; and a torsion spring, or other equivalent means, elastically urges the respective shaft to rotate so as to move the lever connected thereto into approach position (that is, close) to the other lever.

To make this manoeuvre easily operable, the finger levers take up a divaricated position when the two levers are in a contrast position for the chain links; by moving the finger levers close to each other the two levers are caused to move away from each other so that the chain is free to slide inside the shaped passage up to a further contrast condition of a link thereof, which is obtained by the release of the finger levers.

The drawing shows a feasible embodiment of the invention, and in particular:

Fig.1 shows an elevation front view of the clamp for chains according to the Invention;

Figs.2 and 3 show respectively, views on lines II-II and III-III of Fig.1; and

Fig.4 shows a view similar to that of Fig.1, but wherein

- 2 -

the members of the clamp are shown in their contrast position.

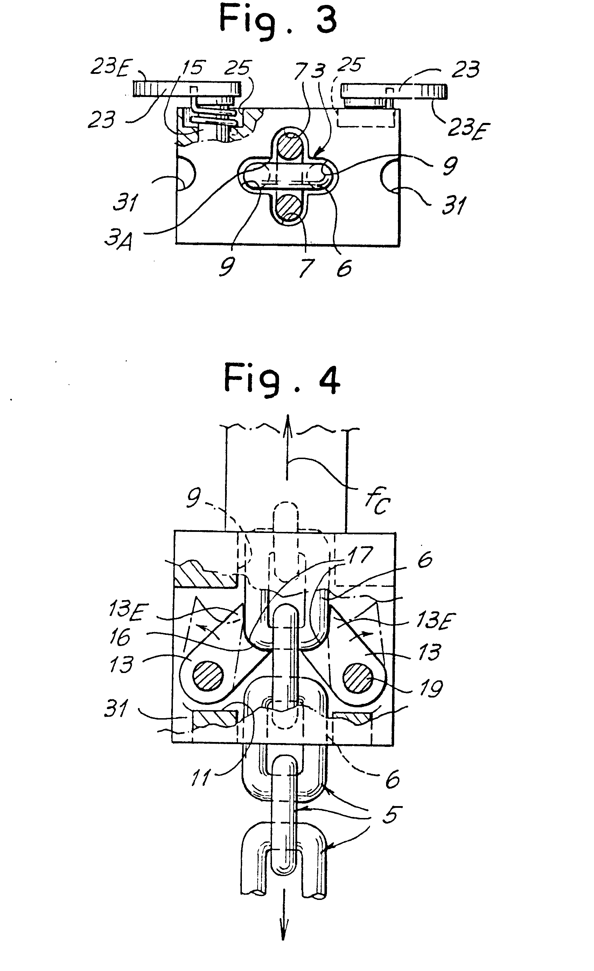

As illustrated in the attached drawing, the chains engaging clamp according to the invention, comprises a block 1, mostly made of steel or other suitable material, inside which a passage 3 is formed shaped as a cross with like arms, whose mouth-piece 3A can be seen in Fig.3. Inside the passage 3, a chain 5 - especially a gauged chain, having high resistance and of the type used for ship anchors, lifting equipment etc., that is, having oval links engaged between them - can slide, which links, when the chain is oriented, result in such arrangement that the preceding one is orthogonal to the one which follows. The passage 3 is therefore inside suitable to guide the sliding movement of the oriented chain as it includes two pairs of opposite channels 7 and 9, the axis of the channels 7 being orthogonal to the axis of the channels 9. The chain, by entering the passage 3 through the mouth piece 3A results easily oriented, both in case of a chain having links dimensioned for that passage and in case of a similar chain having little smaller links. Inside the block 1, the channels 9 have openings 11 for the passage of an end 13E of a respective lever 13 being articulated at 15 to the block 1. The levers 13 are symmetrically movable relative to the

- 3 -

channel 3 and are able to take up respectively: a close up position, as shown in Fig.4, in which they give rise to a contrast shoulder for the links 6 of the chain 5, said links being oriented with their own median plane parallel to the upper and lower faces of the block 1;

and a mutual divaricated position, in which said chain links together with those that are in orthogonal orientation thereto may freely slide inside the passage 3, the ends 13E of said levers being, in such position, outside the channels 9. The contrast shoulder for the links 6 is obtained by shaping the ends 13E with a cavity 17 which, for each lever, results in contact with and embraces almost half the arc of the link which is at a rear position in respect to the advancement direction of the chain indicated by fc.

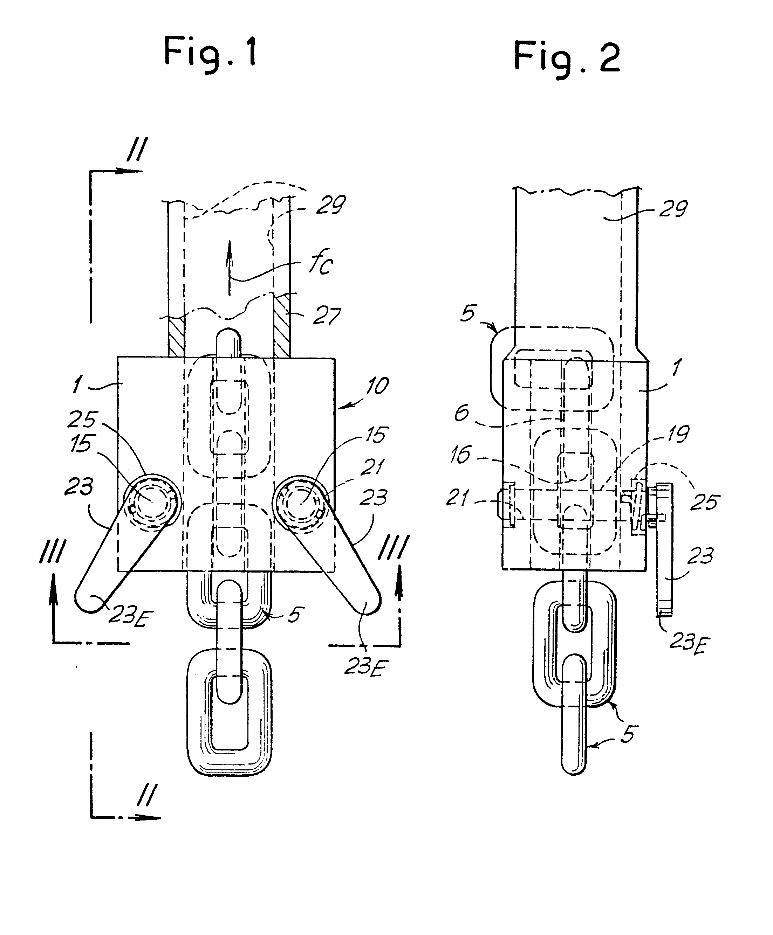

The articulation at 15 of levers 13 is obtained through strong shafts 19 supported within holes 21 formed in the block 1, each shaft 19 integrally rotating with the respective lever 13. To each shaft 19, above the block 1 (Fig.1), a finger-lever 23 is secured for the outside--operated manoeuvre of levers 13 from the contrast position to the retracted position; a torsion spring (not shown) of small  dimensions is housed in a cavity 25 below each lever 23 and is predisposed to elastically urge, through the shafts 19, the levers 13 one towards the other into

- 4 -

the described contrast position. The finger-levers 23 result divaricated, as shown in Fig.1, when the levers 13 are in close position to each other, and by the simple action of two fingers, their ends can be brought near to one another, the levers 13 thereby assuming a divaricated position. The block 1 may have side slots 31 apt to facilitate the mounting of levers 13, but also to allow said levers to take up the divaricated position. Substantially, the slots 31 communicate with the passage 3, the walls of channels 9 being interrupted at 11 to allow the movement of the levers 13 in either directions.

According to the drawing, the clamp 10 is completed (upwards, in the drawing) with a fork member 27 solid or integral with the block 1, between the stems 29 of which, the chain may be made to slide through the passage 3, to be arranged within a crate onto the floor or in other way. At the opposite end of block 1 the member 27 may be completed, with a hook, a crossbeam, a ring (not shown) or other suitable means in order to firmly anchor the clamp 10 and put the chain into tension.

According to the above description and the drawing, the clamp according to the invention is suitable for engaging metal chains of the type described for several uses, in which a chain stretch - whose length is to be possibly defined or changed at the beginning (or upon subsequent steps) of the operation – must be put into tension. Substantially, the chain is made to slide in the clamp two steps at a time until the stretch which is to perform the draught results almost stretched; then, the force-requiring operation (for example to straighten a metal sheet) to be performed by means of the chain, is carried out with the use of the clamp 10 as the application point at which the draught force of the chain acts. In this way, by only one chain length, it is possible to carry out different operations without the need of cutting at different lengths various pieces of chain for each operation.

In the approached position, the cavity 17 of the levers 13 result close to each other so as to fully support the half-link with which they cooperate, thus avoiding said half-link to be shear-stressed by the chain draught.

C L A I M S

1) A clamp for engaging metal chains suitable for several uses, in mechanics (car-body building), in ship--building and other, characterized in that it comprises, within a block, a shaped passage to guide the sliding of the oriented chain, and a pair of levers symmetrically movable relative to said passage, manoeuvrable from the outside, and elastically urged one towards the other into a position in which they give rise to a contrast shoulder for the chain links that find themselves in an alternate orientation in respect to the ones which are in the orthogonal orientation.

2) Clamp according to the preceding claim ,characterized in that the two levers have concave ends to fit the profile of the links which they must cooperate with.

3) Clamp according to the preceding claims,characterized in that the levers are moved close to one another so as to avoid a shearing stress of the link with which they co-act.

4) Clamp according to the preceding claims,characterized in that each of the two levers is carried by a shaft resting on opposite sides on the block.

5) Clamp according to the preceding claims,characterized in that the levers can be actuated by respective finger (or equivalent) levers - each one being solid with said shaft – outwardly disposed in respect to a face of said block; and a torsion spring, or other equivalent means, elastically urging the respective shaft to rotate in order to move the lever connected thereto

into approach position to the other lever.

5) Clamp according to the preceding claims, characterized in that the finger-levers take up a divaricated position when the two levers are in a contrast position for the chain links and that, by moving the finger-levers close to each other, said levers are caused to move away from each other so that the chain is free to slide inside the shaped passage up to a further contrast condition of a link thereof which is obtained by the release of the finger-levers.

7) Clamp according to the preceding claims, characterized in that with said block, a fork member is solid, between the stems of which member the inoperative branch of the chain can unroll, said member exhibiting a hold means like a hook, a crossbeam, a ring, through which the operative branch of the chain is put under draught.

8) Clamp according to the preceding claims, characterized in that inside the block, on the sides of the shaped passage, spaces are formed for divaricating the levers, said spaces being accessible from side slots for an easier assembly.

# Fig.1

# Fig.2

# Fig. 3

23E 15 25 7 3 25 23

23

31

3A

9 7 6

9

31

# Fig. 4

fc

9

17 6

13E

16

13 13E

31 13

19

11 6

5